# EUROPEAN PATENT APPLICATION

(11) **EP 2 267 298 A2**
(43) Date of publication of application: **29.12.2010**
(21) Application number: 10165658.5
(22) Date of filing: 11.06.2010
(51) Int. Cl.: F03D 1/06, F03D 7/02

(54) **Wind turbine blade with rotatable fins at the tip**

(30) Priority: 22.06.2009 US 488801
(71) Applicant: General Electric Company, Schenectady, NY 12345 (US)
(72) Inventor: Benito, Pedro L., 48429, Rheine (DE)
(74) Representative: Bedford, Grant Richard

(57) **Abstract**

A wind turbine blade (20) includes a plurality fins (22), each fin rotatably-joined to a tip of the blade (20).

## Description

The subject matter described here generally relates to wind turbines, and, more particularly, to wind turbine blades with hinged tips.

A wind turbine is a machine for converting the kinetic energy in wind into mechanical energy. If the mechanical energy is used directly by the machinery, such as to pump water or to grind wheat, then the wind turbine may be referred to as a windmill. Similarly, if the mechanical energy is converted to electricity, then the machine may also be referred to as a wind generator or wind power plant.

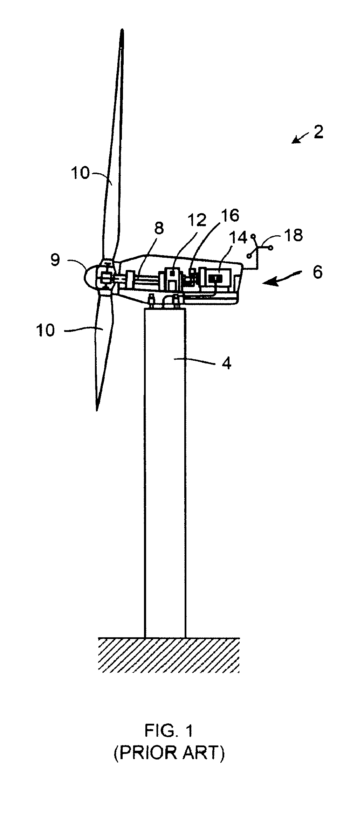

Wind turbines are typically categorized according to the vertical or horizontal axis about which the blades rotate. One so-called horizontal-axis wind generator is schematically illustrated in FIG. 1 and available from General Electric Company. This particular configuration for a wind turbine 2 includes a tower 4 supporting a nacelle 6 enclosing a drive train 8. The blades 10 are arranged on a "spinner" or hub 9 to form a "rotor" at one end of the drive train 8 outside of the nacelle 6. The rotating blades 10 drive a gearbox 12 connected to an electrical generator 14 at the other end of the drive train 8 arranged inside the nacelle 6 along with a control system 16 that may receive input from an anemometer 18.

The blades 10 generate lift and capture momentum from moving air that is them imparted to the rotor as the blades spin in the "rotor plane." Each blade 10 is typically secured to the hub 9 at its "root" end, and then "spans" radially "outboard" to a free, "tip" end. The front, or "leading edge," of the blade 10 connects the forward-most points of the blade that first contact the air. The rear, or "trailing edge," of the blade 10 is where airflow that has been separated by the leading edge rejoins after passing over the suction and pressure surfaces of the blade. A "chord line" connects the leading and trailing edges of the blade in the direction of the typical airflow across the blade. The length of the chord line is simply the "chord." The thickness of a blade 10 varies across the span, and the term "thickness" is typically used to describe the maximum distance between the low pressure suction surface and the high pressure surface on the opposite side of the blade for any particular chord line. The outboard ends of the blades 10 are called "tips" and the distance from the tip to the root, at the opposite end of the blade, is called the "span." The shape of the blade 10, when viewed perpendicular to the direction of flow, is called the "planform."

World Intellectual Property Organization Publication No. 2006/133715 discloses a blade for a wind turbine power plant including at least one joint transversally to the longitudinal direction of the blade, about which the outermost part of the turning of the blade out of the original face of rotation of the blade can be controlled by an actuator whereby the rotor area can be controlled in operation. The joint may be turned about a rotary joint such as a hinge or configured as a resilient joint. Several joints may be located in succession in the blade.

Various drawbacks associated with such conventional approaches are addressed here in by providing, in various embodiments, a wind turbine blade including a plurality fins, each fin rotatably joined to a tip of the blade.

In accordance with one embodiment of the present invention, a wind turbine blade is provided comprising a plurality of fins, each fin rotatably-joined to a tip of the blade. The fins may be rotatable in three dimensions. The fins may also be rotatable-joined by a spherical joint. The wind turbine blade may further comprise an actuator for rotating the fins.

In accordance with a second embodiment of the present invention, a wind generator is provided comprising; a tower for supporting a drive train with a rotor; a gearbox, connected to the rotor, for driving an electrical generator; at least one blade, connected to the rotor, for driving the gearbox; wherein the blade comprises a plurality fins, each fin rotatably-joined to a tip of the blade. The fins may be rotatable in three dimensions. The fins may also be rotatable-joined by a spherical joint. The wind turbine blade may further comprise an actuator for rotating the fins.

Various aspects of this technology will now be described with reference to the following figures ("FIGs.") which are not necessarily drawn to scale, but use the same reference numerals to designate corresponding parts throughout each of the several views, and in which:
FIG. 1 is a schematic side view of a conventional wind turbine.
FIG. 2 is an end view of a wind turbine blade tip.
FIG. 3 is an orthographic view of the wind turbine blade tip shown in FIG. 2.
FIG. 4 is an end view of another wind turbine blade tip.
FIG. 5 is an orthographic view of the wind turbine blade tip shown in FIG. 4.
FIG. 6 is an end view of another wind turbine blade tip.
FIG. 7 is an orthographic view of the wind turbine blade tip shown in FIG. 6.
FIG. 8 is a schematic top view of a wind turbine blade tip.

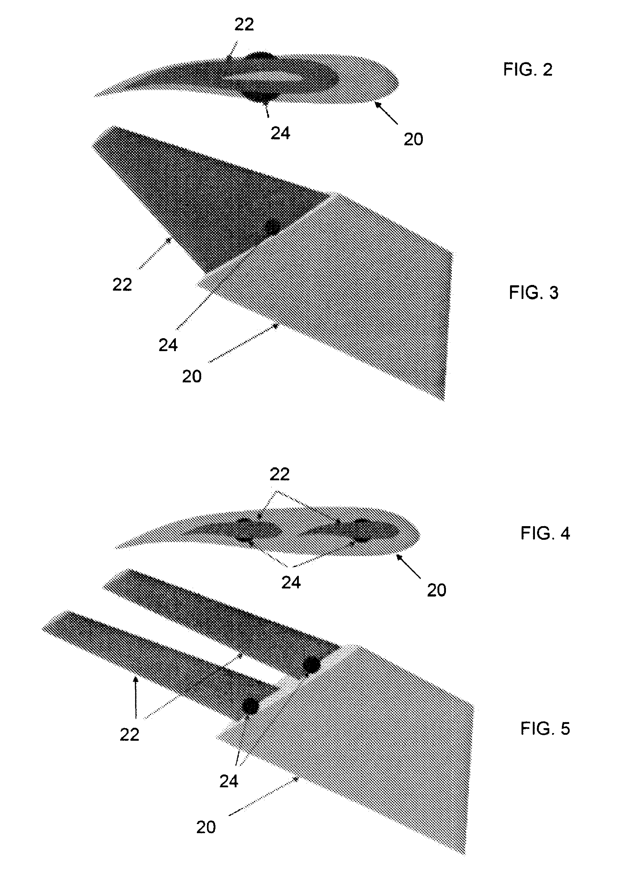

FIG. 2 is an end view of a wind turbine blade tip 20, while FIG. 3 is an orthographic view of the wind turbine blade tip 20 shown in FIG. 2. The blade tip 20 may be used with the blade 10 on wind turbine 2 shown in FIG. 1, or any other wind turbine blade.

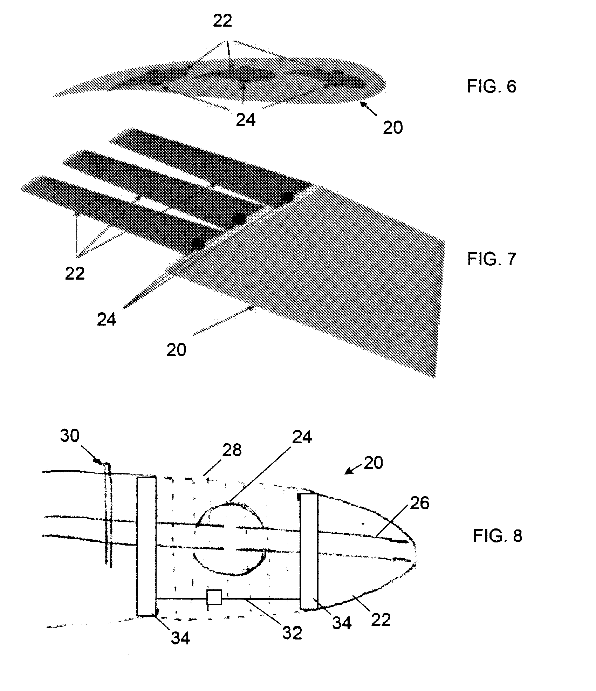

The blade tip 20 includes one or more fins 22 which are each secured to the blade by a joint 24. For example, as shown in FIGs. 4 and 5, two fins 22 may be provided and, as shown in FIGs. 6 and 7, three fins may be provided. Additional fins 22 may also be provided.

The fins 22 may be have an aerodynamic shape. For example, as illustrated in the end views of FIGs. 2, 4, and 6, the end profile of the fins 22 may generally correspond to the end profile of the blade tip 22. However, other aerodynamic profiles may also be used. Although quadrilateral planforms are also illustrated here in FIGs. 3, 5, and 7, other polygonal and non-polygonal planform configurations may also be provided, such a triangular, rectangular, and trapezoidal. The fins 22 can also be used also in combination with active flow control devices such as steady blowing, and/or a synthetic jet of pulse blowing actuators.

The joint(s) 24 provide rotational degrees of freedom in one or more axes for the corresponding fin 22. For example, as illustrated in FIG. 8, the joint 24 may be configured as a spherical joint for rotating in two or three axes where the joint connects two portions of the spar 26. However, other rotary and/or resilient joint configurations may also be provided. In FIG. 8, the joint 24 is also covered by a flexible material such as a sheet 28 which may be fabricated from corrugated silicone, fabric, or other suitable material. An aerodynamic fence 30 may be provided at the leading and/or trailing edge near the blade tip 20 in order to further improve the behavior of the sheet 28.

One or more actuators 32 may be configured, for example with a positional motor, to rotate the fins 22 relative to the ball joints 24 in various configurations. For example, FIG. 8 illustrates a single actuator 32 arranged between ribs 34, for actuating a single fin 22. However, other actuator configurations may also be provided. For example, similar actuators may be provided for some or all of the fins 22 in FIGs. 2-7. Two actuators may be configured to provide a leading edge sweep while four actuator may be configured to provide rotation in three axes. Passive actuation of the fins 22 may also be used.

The technology disclosed here offers various advantages over conventional approaches for enhancing the performance of wind turbine blades through reduced thrust, noise and vibration, and increased torque. For example, the fins 22 may be controlled so that the blades 20 provide increased power in response to higher demand for that power. Conversely, reductions in power production may also be obtained using the actuator 32 and/or pitching the blades. The actuator 32 can be also used increase blade performance by reducing the tip vortex intensity, and thus providing lower thrust, lower drag, less noise, less vibration. The fins 32 can also be arranged to minimize the distance between the blade tips 20 and the tower 4 (FIG. 1), particularly during periods of high wind speeds, extreme wind gusts, or emergency shut downs at any speed.

It should be emphasized that the embodiments described above, and particularly any "preferred" embodiments, are merely examples of various implementations that have been set forth here to provide a clear understanding of various aspects of this technology. One of ordinary skill will be able to alter many of these embodiments without substantially departing from scope of protection defined solely by the proper construction of the appended claims.

Various aspects and embodiments of the present invention are defined by the following numbered clauses:
1. A wind turbine blade comprising a plurality fins, each fin rotatably-joined to a tip of the blade.
2. The wind turbine blade recited in clause 1, wherein the fins are rotatable in three dimensions.
3. The wind turbine blade recited in any preceding clause, further comprising an actuator for rotating the fins.
4. The wind turbine blade recited in any preceding clause, wherein the fins are rotatable-joined by a spherical joint.
5. The wind turbine blade recited in any preceding clause, further comprising an actuator for rotating the fins.
6. The wind turbine blade recited in any preceding clause, wherein the fins are rotatable-joined by a spherical joint.
7. The wind turbine blade recited in any preceding clause, further comprising an actuator for rotating the fins.
8. A wind generator, comprising:
   a tower for supporting a drive train with a rotor;
   a gearbox, connected to the rotor, for driving an electrical generator;
   at least one blade, connected to the rotor, for driving the gearbox;
   wherein the blade comprises a plurality fins, each fin rotatably-joined to a tip of the blade.
9. The wind generator recited in any preceding clause, wherein the fins are rotatable in three dimensions.
10. The wind generator recited in any preceding clause, further comprising an actuator for rotating the fins.
11. The wind generator recited in any preceding clause, wherein the fins are rotatable-joined by a spherical joint.
12. The wind generator recited in any preceding clause, further comprising an actuator for rotating the fins.
13. The generator recited in any preceding clause, wherein the fins are rotatable-joined by a spherical joint.
14. The wind generator recited in any preceding clause, further comprising an actuator for rotating the fins.

## Claims

1. A wind turbine blade (20) comprising a plurality fins (22), each fin rotatably-joined to a tip of the blade.

2. The wind turbine blade (20) recited in claim 1, wherein the fins (22) are rotatable in three dimensions.

3. The wind turbine blade recited in claim 1 or claim 2, wherein the fins (22) are rotatable-joined by a spherical joint (24).

4. The wind turbine blade (20) recited in any of the preceding claims, further comprising an actuator (32) for rotating the fins.

5. A wind generator, comprising:
a tower (4) for supporting a drive train (8) with a rotor;
a gearbox (12), connected to the rotor, for driving an electrical generator (14);
at least one blade (20), connected to the rotor, for driving the gearbox (12);
wherein the blade (20) comprises a plurality fins, each fin rotatably-joined to a tip of the blade (20).

6. The wind generator recited in claim 5, wherein the fins (22) are rotatable in three dimensions.

7. The wind generator recited in claim 5 or claim 6, wherein the fins (22) are rotatable-joined by a spherical joint (24).

8. The wind generator recited in any of claims 5 to 7, further comprising an actuator (32) for rotating the fins (22).
